# EUROPÄISCHE PATENTANMELDUNG

(11) **EP 3 862 483 A1**
(43) Veröffentlichungstag der Anmeldung: **11.08.2021**
(21) Anmeldenummer: 20155665.1
(22) Anmeldetag: 05.02.2020
(51) Int. Cl.: D21B 1/32, D21G 9/00

(54) **AUFBEREITUNG VON ALTPAPIER**

(71) Anmelder: Siemens Aktiengesellschaft, 80333 München (DE)
(72) Erfinder: Schwarz, Hermann, 97084 Würzburg (DE); Wehrstedt, Jan Christoph, 81829 München (DE)

(57) **Zusammenfassung**

Die Erfindung betrifft ein Verfahren und ein System zur Aufbereitung von Altpapier (15) für eine Papierherstellung mit einer Papiermaschine (57). Für die Altpapieraufbereitung wird ein Sollwert für eine Stoffqualität einer der Papiermaschine (57) zuzuführenden Endsuspension (55) vorgegeben und es werden Inhaltsstoffe des Altpapiers (15) und deren Anteile an dem Altpapier (15) bestimmt. Das Altpapier (15) wird einem Pulper (21) zugeführt, mit dem Pulper (21) wird eine Vorsuspension (27) hergestellt, die Vorsuspension (27) wird zu einer Zwischensuspension (43) aufbereitet und die Endsuspension (55) wird aus der Zwischensuspension (43) durch die Zuführung wenigstens eines Zusatzstoffes (51) zu der Zwischensuspension (43) erzeugt. Dabei wird die Stoffqualität der Endsuspension (55) durch eine Fahrweise des Pulpers (21) und/oder eine Zuführung von Rohstoffen (15, 25) zu dem Pulper (21) und/oder die Aufbereitung der Vorsuspension (27) und/oder eine Menge und/oder Zusammensetzung der Zusatzstoffe (51) in Abhängigkeit von den Inhaltsstoffen des Altpapiers (15) und deren Anteilen an dem Altpapier (15) auf den Sollwert für die Endsuspension (55) geregelt.

## Beschreibung

Die Erfindung betrifft ein Verfahren und ein System zur Aufbereitung von Altpapier für eine Papierherstellung mit einer Papiermaschine.

Altpapier ist ein wichtiger Rohstoff der Papierproduktion. Um Altpapier für die Papierproduktion aufzubereiten, wird das Altpapier zerfasert und es werden in dem Altpapier enthaltene Störstoffe entfernt und gegebenenfalls Zusatzstoffe hinzugefügt. Für die Zerfaserung wird das Altpapier in der Regel in einem Pulper zu einer Fasersuspension aufgelöst. Störstoffe, die beispielsweise aus Kunststoff, Metall, Glas oder Asche bestehen, werden von den nutzbaren Fasern des Altpapiers bei einer Stoffaufbereitung getrennt. Die Stoffaufbereitung kann weitere Aufbereitungsschritte umfassen, beispielsweise ein Fraktionieren der Fasern in Lang- und Kurzfasern, ein Entfernen von Druckfarben (so genanntes Deinken) und/oder ein Dispergieren des Fasermaterials. Zusatzstoffe, die der Fasersuspension hinzugefügt werden, sind beispielsweise Bindemittel, Färbemittel, Entwässerungsmittel, Retentionsmittel und/oder Leimungsmittel. Die aufbereitete Fasersuspension wird einer Papiermaschine zur Papierherstellung zugeführt.

Für eine Papierproduktion, die auf Altpapier als Rohstoff basiert, ist es eine große Herausforderung, eine gleichbleibend hohe Produktqualität bei konstant hoher Laufleistung der Papiermaschine zu erzeugen. Das gelieferte Altpapier hat trotz verschiedener standardisierter Altpapierklassifizierungen eine hohe Qualitätsstreuung. Um bei der Trennung von Fasern und Störstoffen Faserverluste zu reduzieren, wird oft eine unvollständige Entfernung von Störstoffen in Kauf genommen, so dass Störstoffe bis zur Papiermaschine gelangen. Unter anderem führt dies zu Ablagerungen in der Papiermaschine, die wiederum Stillstände der Papierproduktion nach sich ziehen, zu einem erhöhten Verschleiß von Komponenten der Papiermaschine und zu einer Qualitätsbeeinträchtigung des produzierten Papiers. Ferner können sich weitere Ablagerungen in der Papiermaschine durch eine Temperaturerhöhung im Trockenbereich der Papiermaschine ergeben, in dem organisch gelöste Substanzen polymerisieren oder sich im Papier ablagern und zu weiteren Qualitätseinbußen führen.

Der Erfindung liegt die Aufgabe zugrunde, eine Aufbereitung von Altpapier für eine Papierherstellung mit einer Papiermaschine anzugeben, die insbesondere hinsichtlich der Qualität der bei der Altpapieraufbereitung hergestellten Fasersuspension verbessert ist.

Die Aufgabe wird erfindungsgemäß durch ein Verfahren mit den Merkmalen des Anspruchs 1 und ein System mit den Merkmalen des Anspruchs 14 gelöst.

Vorteilhafte Ausgestaltungen der Erfindung sind Gegenstand der Unteransprüche.

Bei dem erfindungsgemäßen Verfahren zur Aufbereitung von Altpapier für eine Papierherstellung mit einer Papiermaschine wird ein Sollwert für eine Stoffqualität einer der Papiermaschine zuzuführenden Endsuspension vorgegeben und es werden Inhaltsstoffe des Altpapiers und deren Anteile an dem Altpapier bestimmt. Das Altpapier wird einem Pulper zugeführt, mit dem Pulper wird eine Vorsuspension hergestellt, die Vorsuspension wird zu einer Zwischensuspension aufbereitet, und die Endsuspension wird aus der Zwischensuspension durch die Zuführung wenigstens eines Zusatzstoffes zu der Zwischensuspension erzeugt. Dabei wird die Stoffqualität der Endsuspension durch eine Fahrweise des Pulpers und/oder eine Zuführung von Rohstoffen zu dem Pulper und/oder die Aufbereitung der Vorsuspension und/oder eine Menge und/oder Zusammensetzung der Zusatzstoffe in Abhängigkeit von den Inhaltsstoffen des Altpapiers und deren Anteilen an dem Altpapier auf den Sollwert für die Endsuspension geregelt.

Das erfindungsgemäße Verfahren sieht also eine der Altpapieraufbereitung vorgeschaltete Analyse des aufzubereitenden Altpapiers hinsichtlich seiner Inhaltsstoffe und eine von dieser Analyse abhängige Regelung der Stoffqualität einer bei der Altpapieraufbereitung herzustellenden Fasersuspension auf einen Sollwert vor. Zur Regelung der Stoffqualität werden die Fahrweise des Pulpers, die Zuführung von Rohstoffen zu dem Pulper, die Stoffaufbereitung einer von dem Pulper erzeugten Vorsuspension und/oder eine Menge und/oder Zusammensetzung von Zusatzstoffen, die der Fasersuspension zugefügt werden, beeinflusst. Die Regelung zielt also auf die Bereitstellung einer definierten Stoffqualität der aus Altpapier hergestellten Fasersuspension vor deren Zuführung zu einer Papiermaschine unter Berücksichtigung der Qualität des Altpapiers. Dadurch kann die Altpapieraufbereitung der Qualität des Altpapiers angepasst werden und eine Stoffqualität der bei der Altpapieraufbereitung hergestellten Fasersuspension kann kontrolliert und aktiv beeinflusst werden. Insbesondere können damit aufwändige und kostspielige Qualitätsnachbesserungen während der nachfolgenden Papierproduktion in der Papiermaschine, die infolge einer minderwertigen Fasersuspension erforderlich werden können, ebenso vermieden werden wie eine überdimensionierte Altpapieraufbereitung, die eine unnötig hochwertige Fasersuspension bereitstellt.

Bei einer Ausgestaltung des erfindungsgemäßen Verfahrens werden Anfangswerte für die Fahrweise des Pulpers und/oder für die Zuführung von Rohstoffen zu dem Pulper und/oder für die Aufbereitung der Vorsuspension und/oder für die Menge und/oder Zusammensetzung der Zusatzstoffe in Abhängigkeit von den Inhaltsstoffen des Altpapiers und deren Anteilen an dem Altpapier eingestellt. Gemäß dieser Ausgestaltung des erfindungsgemäßen Verfahrens können Anfangswerte der Regelung der vorher ermittelten Qualität des Altpapiers angepasst werden. Dadurch wird vermieden, dass beim Anfahren der Altpapieraufbereitung unnötig hoher Ausschuss entsteht. Ferner kann die Regelung auf den Sollwert der Fasersuspension durch der Altpapierqualität angepasste Anfangswerte beschleunigt werden. Bei einer weiteren Ausgestaltung des erfindungsgemäßen Verfahrens werden die Inhaltsstoffe des Altpapiers und deren Anteile an dem Altpapier vor einem Transport des Altpapiers zu dem Pulper bestimmt. Beispielsweise werden die Inhaltsstoffe des Altpapiers und deren Anteile an dem Altpapier bereits bei den Versorgungsunternehmen ermittelt, die das Altpapier für die Altpapieraufbereitung liefern. Dadurch entfällt eine aufwändige Analyse des Altpapiers am Ort der Altpapieraufbereitung.

Bei einer weiteren Ausgestaltung des erfindungsgemäßen Verfahrens werden die Inhaltsstoffe des Altpapiers und deren Anteile an dem Altpapier unter Verwendung von Nahinfrarotspektroskopie bestimmt. Nahinfrarotspektroskopie ermöglicht insbesondere eine relativ zuverlässige und kostengünstige Ermittlung von Störstoffanteilen in Altpapier und eignet sich deshalb für die Analyse des Altpapiers.

Bei einer weiteren Ausgestaltung des erfindungsgemäßen Verfahrens wird das Altpapier umso länger in dem Pulper aufgelöst, je höher der Anteil von Störstoffen an dem Altpapier und/oder je geringer eine Faserqualität des Altpapiers und/oder je höher eine erwünschte Papierqualität des herzustellenden Papiers ist. Diese Ausgestaltung des erfindungsgemäßen Verfahrens nutzt aus, dass durch eine Erhöhung der Verweilzeit des Altpapiers in dem Pulper eine Stoffauflösung des Altpapiers in dem Pulper verbessert werden kann.

Bei einer weiteren Ausgestaltung des erfindungsgemäßen Verfahrens umfasst die Aufbereitung der Vorsuspension eine Stoffsortierung und/oder eine Dispergierung und/oder eine Bleichung. Durch die genannten Teilprozesse der Aufbereitung der Vorsuspension kann die Qualität der Vorsuspension vorteilhaft in verschiedener Hinsicht verbessert werden. Durch eine Stoffsortierung können Störstoffe aus der Fasersuspension entfernt werden, durch eine Dispergierung kann die Fasersuspension vergleichmäßigt werden und durch eine Bleichung kann ein Weißegrad des herzustellenden Papiers erhöht werden. Bei einer weiteren Ausgestaltung des erfindungsgemäßen Verfahrens umfasst die Aufbereitung der Vorsuspension mehrere Kaskadenstufen, deren Anzahl und/oder Art von den Inhaltsstoffen des Altpapiers und deren Anteilen an dem Altpapier abhängt. Eine Kaskadierung der Aufbereitung der Vorsuspension ermöglicht vorteilhaft insbesondere eine Anpassung der Anzahl und Art von Kaskadenstufen an die Qualität des Altpapiers und an die angestrebte Stoffqualität der durch die Altpapieraufbereitung herzustellenden Fasersuspension. Insbesondere können bei einer Verringerung der Qualität des Altpapiers oder einer Erhöhung der angestrebten Stoffqualität der Fasersuspension Kaskadenstufen hinzugeschaltet werden.

Bei einer weiteren Ausgestaltung des erfindungsgemäßen Verfahrens wird ein Sollwert für eine Stoffqualität der Vorsuspension vorgegeben und die Stoffqualität der Vorsuspension wird durch eine Fahrweise des Pulpers und/oder eine Zuführung von Rohstoffen zu dem Pulper auf den Sollwert für die Vorsuspension geregelt. Der Sollwert für die Vorsuspension wird beispielsweise in Abhängigkeit von dem Sollwert für die Endsuspension und/oder von den Inhaltsstoffen des Altpapiers und deren Anteilen an dem Altpapier vorgegeben.

Bei einer weiteren Ausgestaltung des erfindungsgemäßen Verfahrens wird ein Sollwert für eine Stoffqualität der Zwischensuspension vorgegeben und die Stoffqualität der Zwischensuspension wird durch Regelung der Stoffaufbereitung der Vorsuspension auf den Sollwert für die Zwischensuspension geregelt. Der Sollwert für die Zwischensuspension wird beispielsweise in Abhängigkeit von dem Sollwert für die Endsuspension und/oder von den Inhaltsstoffen des Altpapiers und deren Anteilen an dem Altpapier vorgegeben.

Die beiden vorgenannten Ausgestaltungen des erfindungsgemäßen Verfahrens zielen auf eine Aufteilung der Regelung der Stoffqualität der Fasersuspension auf Unterregelkreise für die Stoffqualitäten der Vorsuspension und der Zwischensuspension. Dadurch wird die Regelung vorteilhaft modularisiert und vereinfacht.

Ein erfindungsgemäßes System zur Altpapieraufbereitung gemäß dem erfindungsgemäßen Verfahren umfasst
- wenigstens eine Analyseeinheit, die zum Bestimmen der Inhaltsstoffe des Altpapiers und deren Anteilen an dem Altpapier eingerichtet ist,
- eine Zerfaserungsanlage mit einem Pulper, dessen Fahrweise steuerbar ist und/oder dem Rohstoffe steuerbar zuführbar sind,
- eine Stoffaufbereitungsanlage, die zum steuerbaren Aufbereiten der Vorsuspension zu der Zwischensuspension eingerichtet ist,
- eine Zusatzstoffzuführungsanlage, die zum Zuführen der Zusatzstoffe mit einer steuerbaren Menge und/oder Zusammensetzung eingerichtet ist, und
- eine Steuerungsanlage, die eingerichtet ist, die Stoffqualität der Endsuspension durch eine Steuerung der Zerfaserungsanlage und/oder der Stoffaufbereitungsanlage und/oder der Zusatzstoffzuführungsanlage in Abhängigkeit von den Inhaltsstoffen des Altpapiers und deren Anteilen an dem Altpapier auf den Sollwert für die Endsuspension zu regeln.

Ein erfindungsgemäßes System zur Altpapieraufbereitung ermöglicht die Realisierung des erfindungsgemäßen Verfahrens. Die Vorteile eines derartigen Systems entsprechen daher den oben genannten Vorteilen des erfindungsgemäßen Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm eines Systems zur Altpapieraufbereitung und
- FIG 2: ein Ablaufdiagramm eines Verfahrens zur Altpapieraufbereitung.

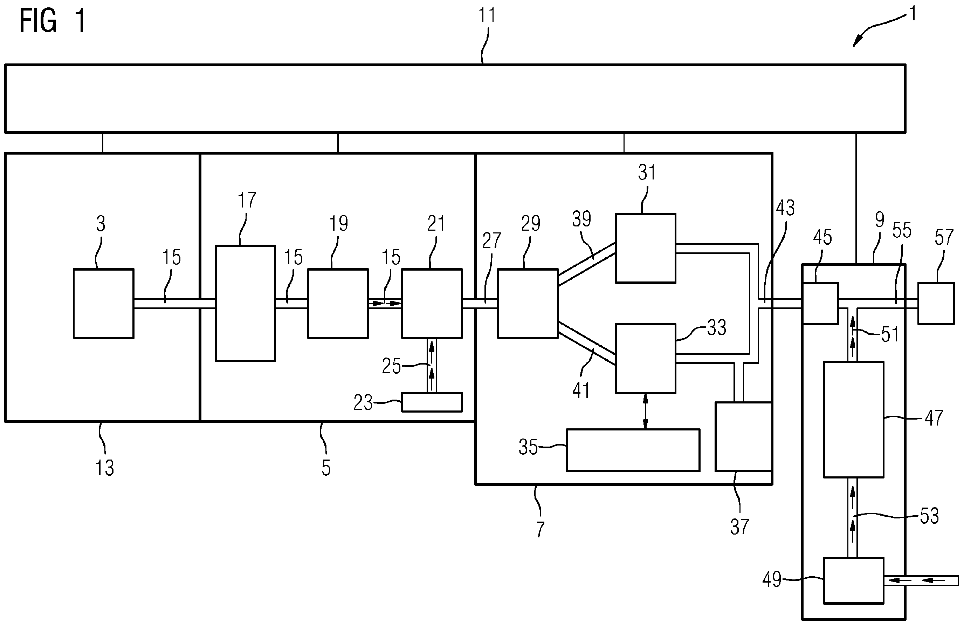

Figur 1 (FIG 1) zeigt ein Blockdiagramm eines Ausführungsbeispiels eines Systems 1 zur Altpapieraufbereitung. Das System 1 umfasst wenigstens eine Analyseeinheit 3, eine Zerfaserungsanlage 5, eine Stoffaufbereitungsanlage 7, eine Zusatzstoffzuführungsanlage 9 und eine Steuerungsanlage 11.

Die Analyseeinheit 3 ist beispielsweise bei einem Altpapierentsorgungsunternehmen 13 angeordnet, das Altpapier 15 sammelt und der Zerfaserungsanlage 5 liefert. Die Analyseeinheit 3 ist zum Bestimmen von Inhaltsstoffen des Altpapiers 15 und deren Anteilen an dem Altpapier 15 eingerichtet. Beispielsweise werden die Inhaltsstoffe des Altpapiers 15 und deren Anteile an dem Altpapier 15 mit der Analyseeinheit 3 unter Verwendung von Nahinfrarotspektroskopie bestimmt.

Die Zerfaserungsanlage 5 weist ein Altpapierlager 17, einen Altpapierförderer 19, einen Pulper 21 und eine Rohstoffzuführeinrichtung 23 auf. In dem Altpapierlager 17 wird Altpapier 15 gelagert, das von dem Altpapierentsorgungsunternehmen 13 geliefert wird. Mit dem Altpapierförderer 19 wird Altpapier 15 aus dem Altpapierlager 17 in den Pulper 21 gefördert. Mit der Rohstoffzuführeinrichtung 23 können dem Pulper 21 weitere Rohstoffe 25, beispielsweise weitere Faserstoffe und/oder Füllstoffe, zugeführt werden. Mit dem Pulper 21 werden das dem Pulper 21 zugeführte Altpapier 15 und gegebenenfalls die dem Pulper 21 mit der Rohstoffzuführeinrichtung 23 zugeführten weiteren Rohstoffe 25 zu einer Vorsuspension 27 aufgelöst, die der Stoffaufbereitungsanlage 7 zugeführt wird.

Die Stoffaufbereitungsanlage 7 umfasst eine Vorsortierungseinrichtung 29, eine Langfaseraufbereitungseinrichtung 31, eine Kurzfaseraufbereitungsseinrichtung 33, eine Kaskadierungseinrichtung 35 und eine Nachbearbeitungseinrichtung 37. Mit der Vorsortierungseinrichtung 29 wird die Vorsuspension 27 vorsortiert, wobei grobe Störstoffe aus der Vorsuspension 27 entfernt werden und die von den groben Störstoffen gereinigte Vorsuspension 27 in eine vornehmlich Langfasern enthaltene Langfasersuspension 39 und eine vornehmlich Kurzfasern enthaltene Kurzfasersuspension 41 aufgeteilt wird. Mit der Langfaseraufbereitungseinrichtung 31 wird die Langfasersuspension 39 aufbereitet, wobei weitere Störstoffe aus der Langfasersuspension 39 entfernt werden. Mit der Kurzfaseraufbereitungseinrichtung 33 wird die Kurzfasersuspension 41 aufbereitet, wobei weitere Störstoffe aus der Kurzfasersuspension 41 entfernt werden. Die Langfaseraufbereitungseinrichtung 31 und/oder die Kurzfaseraufbereitungseinrichtung 33 können kaskadiert ausgeführt sein, das heißt mehrere Kaskadenstufen der Stoffaufbereitung aufweisen, in denen beispielsweise jeweils Störstoffe mit unterschiedlichen Eigenschaften, beispielsweise Störstoffe mit unterschiedlichen Dicken und/oder Längen aussortiert werden. Die Kaskadierungseinrichtung 35 stellt bedarfsweise zuschaltbare weitere derartige Kaskadenstufen für die Stoffaufbereitung, insbesondere der Kurzfasersuspension 41, bereit. Die Nachbearbeitungseinrichtung 37 weist weitere bedarfsweise zuschaltbare Aggregate zur Stoffaufbereitung der Kurzfasersuspension 41 auf, beispielsweise eine Dispergierungseinrichtung zum Dispergieren, eine Refinereinrichtung zum Refining und/oder eine Deinkingeinrichtung zum Druckfarbenentfernen. Auch die Nachbearbeitungseinrichtung 37 kann kaskadiert ausgeführt sein, wobei Kaskadenstufen bedarfsweise zuschaltbar sind.

Die aufbereitete Langfasersuspension 39 und die aufbereitete Kurzfasersuspension 41 werden zu einer Zwischensuspension 43 zusammengeführt, die der Zusatzstoffzuführungsanlage 9 zugeführt wird. Die Zusatzstoffzuführungsanlage 9 umfasst eine Filtereinheit 45, eine Zusatzstoffzuführungseinrichtung 47 und eine Bindemittelzuführungseinrichtung 49. Die Filtereinheit 45 ist eingerichtet, in der Zwischensuspension 43 verbliebene Störstoffe aus der Zwischensuspension 43 zu entfernen. Die Zusatzstoffzuführungseinrichtung 47 ist eingerichtet, der durch die Filtereinheit 45 gereinigten Zwischensuspension 43 Zusatzstoffe 51, beispielsweise Färbemittel, Entwässerungsmittel, Retentionsmittel und/oder Leimungsmittel zuzuführen. Die Bindemittelzuführungseinrichtung 49 ist bedarfsweise zuschaltbar und eingerichtet, der durch die Filtereinheit 45 gereinigten Zwischensuspension 43 über die Zusatzstoffzuführungseinrichtung 47 ein Bindemittel 53 als weiteren Zusatzstoff 51 zuzuführen. Durch die von der Zusatzstoffzuführungseinrichtung 47 und gegebenenfalls von der Bindemittelzuführungseinrichtung 49 zugeführten Zusatzstoffe wird aus der durch die Filtereinheit 45 gereinigten Zwischensuspension 43 eine Endsuspension 55 erzeugt, die einer Papiermaschine 57 zum Herstellen von Papier zugeführt wird.

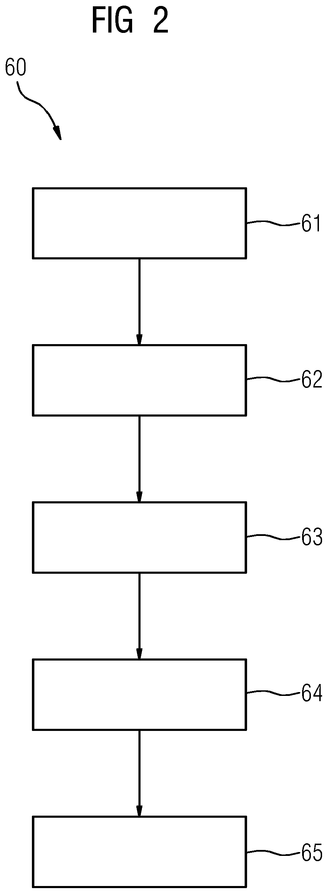

Die Steuerungsanlage 11 ist einrichtet, die Stoffqualität der Endsuspension 55 durch eine Steuerung der Zerfaserungsanlage 5, der Stoffaufbereitungsanlage 7 und der Zusatzstoffzuführungsanlage 9 in Abhängigkeit von den Inhaltsstoffen des Altpapiers 15 und deren Anteilen an dem Altpapier 15 auf einen vorgegebenen Sollwert für die Endsuspension 51 zu regeln. Dazu sind eine Fahrweise des Pulpers 21, der Altpapierförderer 19, die Rohstoffzuführeinrichtung 23, die Vorsortierungseinrichtung 29, die Langfaseraufbereitungseinrichtung 31, die Kurzfaseraufbereitungsseinrichtung 33, die Kaskadierungseinrichtung 35, die Nachbearbeitungseinrichtung 37, die Filtereinheit 45, die Zusatzstoffzuführungseinrichtung 47 und die Bindemittelzuführungseinrichtung 49 von der Steuerungsanlage 11 steuerbar. Insbesondere kann die Steuerungsanlage 11 eingerichtet sein, gemäß einem unten anhand von Figur 2 beschriebenen Verfahren die Regelung aufzuteilen auf hintereinander geschaltete Regelungen der Stoffqualitäten der Vorsuspension 27, der Zwischensuspension 43 und der Endsuspension 55.

Figur 2 (FIG 2) zeigt ein Ablaufdiagramm 60 eines Ausführungsbeispiels des erfindungsgemäßen Verfahrens mit Verfahrensschritten 61 bis 65 zur Aufbereitung von Altpapier 15 für eine Papierherstellung mit einer Papiermaschine 57 unter Verwendung eines anhand von Figur 1 beschriebenen Systems 1 zur Altpapieraufbereitung.

In einem ersten Verfahrensschritt 61 wird ein Sollwert für die Stoffqualität der der Papiermaschine 57 zuzuführenden Endsuspension 55 vorgegeben.

In einem zweiten Verfahrensschritt 62 werden mit wenigstens einer Analyseeinheit 3 Inhaltsstoffe des Altpapiers 15 und deren Anteile an dem Altpapier 15 bestimmt. Beispielsweise wird das Altpapier 15 zu dessen Transport zu der Zerfaserungsanlage 5 zu Altpapierballen gepresst und jeder Altpapierballen wird mit einer Kennzeichnung versehen, die die jeweils ermittelten Inhaltsstoffe des in dem Altpapierballen gepressten Altpapiers 15 und deren Anteile an dem Altpapier 15 des Altpapierballens ausweist. Die Kennzeichnung wird beispielsweise in Form eines Barcodes vorgenommen, der durch ein entsprechendes Lesegerät auslesbar ist, um die Inhaltsstoffe des in dem Altpapierballen gepressten Altpapiers 15 und deren Anteile an dem Altpapier 15 des Altpapierballens an die Steuerungsanlage 11 zu übermitteln.

In einem dritten Verfahrensschritt 63 wird an die Zerfaserungsanlage 5 geliefertes Altpapier 15 in der Zerfaserungsanlage 5 zu der Vorsuspension 27 verarbeitet. Dazu wird ein Sollwert für eine Stoffqualität der Vorsuspension 27 vorgegeben, der von dem Sollwert für die Endsuspension 55 und von den Inhaltsstoffen des dem Pulper 21 zugeführten Altpapiers 15 und deren Anteilen an dem Altpapier 15 abhängt. In einem ersten Regelkreis wird die Stoffqualität der Vorsuspension 27 von der Steuerungsanlage 11 durch die Fahrweise des Pulpers 21 und die Zuführung von Altpapier 15 und weiteren Rohstoffen 25 zu dem Pulper 21 mit dem Altpapierförderer 19 und der Rohstoffzuführeinrichtung 23 auf den Sollwert für die Vorsuspension 27 geregelt. Anfangswerte für die Fahrweise des Pulpers 21 und für die Zuführung von Altpapier 15 und weiteren Rohstoffen 25 zu dem Pulper 21 werden in Abhängigkeit von den Inhaltsstoffen des dem Pulper 21 zugeführten Altpapiers 15 und deren Anteilen an dem Altpapier 15 eingestellt. Bei der Regelung wird beispielsweise das Altpapier 15 umso länger in dem Pulper 21 aufgelöst, je höher der Anteil von Störstoffen an dem Altpapier 15 und/oder je geringer eine Faserqualität des Altpapiers 15 und/oder je höher eine erwünschte Papierqualität des herzustellenden Papiers ist. Ferner wird beispielsweise die Qualtität des dem Pulper 21 mit dem Altpapierförderer 19 zugeführten Altpapiers 15 variiert, indem Altpapierballen mit Altpapier 15 verschiedener Qualitäten verwendet werden, die in dem Altpapierlager 17 gelagert sind. Beispielsweise kann dem Pulper 21 aus dem Altpapierlager 17 ein Altpapierballen mit Altpapier 15 einer höheren Qualität als zuvor zugeführt werden, um die Stoffqualität der Vorsuspension 27 beziehungsweise der Endsuspension 55 zu erhöhen.

In einem vierten Verfahrensschritt 64 wird die Vorsuspension 27 in der Stoffaufbereitungsanlage 7 zu der Zwischensuspension 43 aufbereitet. Dazu wird ein Sollwert für eine Stoffqualität der Zwischensuspension 43 vorgegeben, der von dem Sollwert für die Endsuspension 55 und von den Inhaltsstoffen des dem Pulper 21 zugeführten Altpapiers 15 und deren Anteilen an dem Altpapier 15 abhängt. In einem zweiten Regelkreis wird die Stoffqualität der Zwischensuspension 43 von der Steuerungsanlage 11 durch die Vorsortierungseinrichtung 29, die Langfaseraufbereitungseinrichtung 31, die Kurzfaseraufbereitungsseinrichtung 33, die Kaskadierungseinrichtung 35 und die Nachbearbeitungseinrichtung 37 auf den Sollwert für die Zwischensuspension 43 geregelt. Anfangswerte für die Einstellungen der Vorsortierungseinrichtung 29, der Langfaseraufbereitungseinrichtung 31, der Kurzfaseraufbereitungsseinrichtung 33, der Kaskadierungseinrichtung 35 und der Nachbearbeitungseinrichtung 37 werden in Abhängigkeit von den Inhaltsstoffen des dem Pulper 21 zugeführten Altpapiers 15 und deren Anteilen an dem Altpapier 15 vorgegeben.

Insbesondere kann eine Kaskadierung der Stoffaufbereitung der Langfasersuspension 39 und/oder der Kurzfasersuspension 41 vorgesehen sein, die ferner bedarfsweise während der Stoffaufbereitung geändert werden kann. Beispielsweise können Störstoffe kaskadiert, das heißt in mehreren nacheinander ausgeführten Kaskadenstufen aus der Langfasersuspension 39 und/oder der Kurzfasersuspension 41 entfernt werden. Ferner kann die Nachbearbeitung der Kurzfasersuspension 41 mit der Nachbearbeitungseinrichtung 37 bedarfsweise kaskadiert erfolgen. Beispielsweise kann eine kaskadierte Dispergierung der Kurzfasersuspension 41 ausgeführt werden, wobei vor jeder Dispergierungskaskadenstufe eine Flotation zur Druckfarbenentfernung durchgeführt wird und der Kurzfasersuspension 41 bei jeder Dispergierungskaskadenstufe beispielsweise ein anderes Bleichungsmittel zugeführt wird.

Ferner kann eine Aufteilung des zweiten Regelkreises in Teilregelkreise vorgesehen sein, beispielsweise in einen ersten Teilregelkreis zur Aufbereitung der Langfasersuspension 39 mit der Langfaseraufbereitungseinrichtung 31, einen zweiten Teilregelkreis zur Aufbereitung der Kurzfasersuspension 41 mit der Kurzfaseraufbereitungseinrichtung 33 und der Kaskadierungseinrichtung 35 und einen dritten Teilregelkreis zur Nachbearbeitung der Kurzfasersuspension 41 mit der Nachbearbeitungseinrichtung 37.

In einem fünften Verfahrensschritt 65 wird die Zwischensuspension 43 in der Zusatzstoffzuführungsanlage 9 zu der Endsuspension 55 weiterbearbeitet, indem der Zwischensuspension 43 mit der Zusatzstoffzuführungseinrichtung 47 und bedarfsweise der Bindemittelzuführungseinrichtung 49 Zusatzstoffe 51 zugeführt werden. Dabei wird die Stoffqualität der Endsuspension 55 in einem dritten Regelkreis von der Steuerungsanlage 11 durch die Zusatzstoffzuführungseinrichtung 47 und die Bindemittelzuführungseinrichtung 49 auf den Sollwert für die Endsuspension 55 geregelt. Anfangswerte für die Einstellungen der Zusatzstoffzuführungseinrichtung 47 und der Bindemittelzuführungseinrichtung 49 werden in Abhängigkeit von den Inhaltsstoffen des dem Pulper 21 zugeführten Altpapiers 15 und deren Anteilen an dem Altpapier 15 vorgegeben. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Aufbereitung von Altpapier (15) für eine Papierherstellung mit einer Papiermaschine (57), wobei
- ein Sollwert für eine Stoffqualität einer der Papiermaschine (57) zuzuführenden Endsuspension (55) vorgegeben wird,
- Inhaltsstoffe des Altpapiers (15) und deren Anteile an dem Altpapier (15) bestimmt werden,
- das Altpapier (15) einem Pulper (21) zugeführt wird und mit dem Pulper (21) eine Vorsuspension (27) hergestellt wird,
- die Vorsuspension (27) zu einer Zwischensuspension (43) aufbereitet wird und
- die Endsuspension (55) aus der Zwischensuspension (43) durch die Zuführung wenigstens eines Zusatzstoffes (51) zu der Zwischensuspension (43) erzeugt wird, wobei
- die Stoffqualität der Endsuspension (55) durch eine Fahrweise des Pulpers (21) und/oder eine Zuführung von Rohstoffen (15, 25) zu dem Pulper (21) und/oder die Aufbereitung der Vorsuspension (27) und/oder eine Menge und/oder Zusammensetzung der Zusatzstoffe (51) in Abhängigkeit von den Inhaltsstoffen des Altpapiers (15) und deren Anteilen an dem Altpapier (15) auf den Sollwert für die Endsuspension (55) geregelt wird.

2. Verfahren nach Anspruch 1, wobei Anfangswerte für die Fahrweise des Pulpers (21) und/oder für die Zuführung von Rohstoffen (15, 25) zu dem Pulper (21) und/oder für die Aufbereitung der Vorsuspension (27) und/oder für die Menge und/oder Zusammensetzung der Zusatzstoffe (51) in Abhängigkeit von den Inhaltsstoffen des Altpapiers (15) und deren Anteilen an dem Altpapier (15) eingestellt werden.

3. Verfahren nach Anspruch 1 oder 2, wobei die Inhaltsstoffe des Altpapiers (15) und deren Anteile an dem Altpapier (15) vor einem Transport des Altpapiers (15) zu dem Pulper (21) bestimmt werden.

4. Verfahren nach einem der vorhergehenden Ansprüche, wobei die Inhaltsstoffe des Altpapiers (15) und deren Anteile an dem Altpapier (15) unter Verwendung von Nahinfrarotspektroskopie bestimmt werden.

5. Verfahren nach einem der vorhergehenden Ansprüche, wobei das Altpapier (15) umso länger in dem Pulper (21) aufgelöst wird, je höher der Anteil von Störstoffen an dem Altpapier (15) und/oder je geringer eine Faserqualität des Altpapiers (15) und/oder je höher eine erwünschte Papierqualität des herzustellenden Papiers ist.

6. Verfahren nach einem der vorhergehenden Ansprüche, wobei die Aufbereitung der Vorsuspension (27) eine Stoffsortierung umfasst.

7. Verfahren nach einem der vorhergehenden Ansprüche, wobei die Aufbereitung der Vorsuspension (27) eine Dispergierung umfasst.

8. Verfahren nach einem der vorhergehenden Ansprüche, wobei die Aufbereitung der Vorsuspension (27) eine Bleichung umfasst.

9. Verfahren nach einem der vorhergehenden Ansprüche, wobei die Aufbereitung der Vorsuspension (27) mehrere Kaskadenstufen umfasst, deren Anzahl und/oder Art von den Inhaltsstoffen des Altpapiers (15) und deren Anteilen an dem Altpapier (15) abhängt.

10. Verfahren nach einem der vorhergehenden Ansprüche, wobei ein Sollwert für eine Stoffqualität der Vorsuspension (27) vorgegeben wird und die Stoffqualität der Vorsuspension (27) durch eine Fahrweise des Pulpers (21) und/oder eine Zuführung von Rohstoffen (15, 25) zu dem Pulper (21) auf den Sollwert für die Vorsuspension (27) geregelt wird.

11. Verfahren nach Anspruch 10, wobei der Sollwert für die Vorsuspension (27) in Abhängigkeit von dem Sollwert für die Endsuspension (55) und/oder von den Inhaltsstoffen des Altpapiers (15) und deren Anteilen an dem Altpapier (15) vorgegeben wird.

12. Verfahren nach einem der vorhergehenden Ansprüche, wobei ein Sollwert für eine Stoffqualität der Zwischensuspension (43) vorgegeben wird und die Stoffqualität der Zwischensuspension (43) durch eine Regelung der Stoffaufbereitung der Vorsuspension (27) auf den Sollwert für die Zwischensuspension (43) geregelt wird.

13. Verfahren nach Anspruch 12, wobei der Sollwert für die Zwischensuspension (43) in Abhängigkeit von dem Sollwert für die Endsuspension (55) und/oder von den Inhaltsstoffen des Altpapiers (15) und deren Anteilen an dem Altpapier (15) vorgegeben wird.

14. System (1) zur Altpapieraufbereitung gemäß dem Verfahren nach einem der vorhergehenden Ansprüche, das System umfassend
- wenigstens eine Analyseeinheit (3), die zum Bestimmen der Inhaltsstoffe des Altpapiers (15) und deren Anteilen an dem Altpapier (15) eingerichtet ist,
- eine Zerfaserungsanlage (5) mit einem Pulper (21), dessen Fahrweise steuerbar ist und/oder dem Rohstoffe (15, 25) steuerbar zuführbar sind,
- eine Stoffaufbereitungsanlage (7), die zum steuerbaren Aufbereiten der Vorsuspension (27) zu der Zwischensuspension (43) eingerichtet ist,
- eine Zusatzstoffzuführungsanlage (9), die zum Zuführen der Zusatzstoffe (51) in einer steuerbaren Menge und/oder Zusammensetzung eingerichtet ist, und
- eine Steuerungsanlage (11), die eingerichtet ist, die Stoffqualität der Endsuspension (55) durch eine Steuerung der Zerfaserungsanlage (5) und/oder der Stoffaufbereitungsanlage (7) und/oder der Zusatzstoffzuführungsanlage (9) in Abhängigkeit von den Inhaltsstoffen des Altpapiers (15) und deren Anteilen an dem Altpapier (15) auf den Sollwert für die Endsuspension (55) zu regeln.
